**Europäisches Patentamt**

**European Patent Office**

**Office européen des brevets**

(19)

(11) Veröffentlichungsnummer: **0 001 967**
**B1**

(12) # EUROPÄISCHE PATENTSCHRIFT

(45) Veröffentlichungstag der Patentschrift:
**12.08.81**

(51) Int. Cl.³: **B 65 B 35/30,** B 65 B 35/06,
B 65 B 21/04

(21) Anmeldenummer: **78100904.8**

(22) Anmeldetag: **15.09.78**

(54) **Vorrichtung zum Verpacken von Gruppen von Gegenständen in Behälter.**

(30) Priorität: **11.11.77 DE 2750533**

(43) Veröffentlichungstag der Anmeldung:
**30.05.79 Patentblatt 79/11**

(45) Bekanntmachung des Hinweises auf die Patenterteilung:
**12.08.81 Patentblatt 81/32**

(84) Benannte Vertragsstaaten:
**BE CH FR GB LU NL SE**

(56) Entgegenhaltungen:
**DE-B-2 150 954**
**DE-A-1 486 012**
**DE-A-2 416 579**

(73) Patentinhaber: **FOCKE & CO., Siemensstrasse 10,
D-2810 Verden (DE)**

(72) Erfinder: **Focke, Heinz, Moorstrasse 64, D-2810 Verden
(DE)**

(74) Vertreter: **Bolte, Erich, Dipl.-Ing., Holleraliee 73,
D-2800 Bremen (DE)**

Vorrichtung zum Verpacken von Gruppen von Gegenständen in Behälter

Die Erfindung betrifft eine Vorrichtung zur Bildung und zum Transport von Gruppen von in endlosen Strängen durch einen Vorförderer zugeführten Gegenständen, insbesondere Dosen, Flaschen etc., zur Verpackung in einem Behälter, Karton oder dgl., wobei von den Strängen Gruppen der Gegenstände abgeteilt und an einen Zwischenförderer übergeben werden.

Eine derartige Vorrichtung ist im wesentlichen aus der DE-B-2 150 954 bekannt. Insbesondere ist aus dieser Schrift der Gedanke einer sich stufenförmig steigernden Fördergeschwindigkeit für Gegenstände in Verpackungsmaschinen bekannt. Die zu transportierenden Gegenstände sind dort jedoch keine Dosen, Flaschen oder sonstige Gruppen, sondern empfindliche Einzelgegenstände aus Schokolade. Diese etwa quaderförmigen Gegenstände werden in Dichtlage auf einem Zuführband transportiert. Dieses läuft mit einer bestimmten Geschwindigkeit um, und zwar ohne Unterbrechung. Der dadurch auf dem Zuführband gebildete ununterbrochene Strang von Gegenständen wird zeitweilig durch ein Stempelpaar bzw. durch Anschläge angehalten. Das Stempelpaar und der Anschlag haben die Aufgabe, einen jeweils vorn liegenden Gegenstand von der nachfolgenden Reihe abzuteilen. Ein abgeteilter Gegenstand wird dann durch ein nachfolgendes Zwischenförderband auf eine höhere Geschwindigkeit beschleunigt, und zwar in Verbindung mit einem den Gegenstand an dieses Band andrückenden Stempel. Letzterer läuft an einer horizontal liegenden Kette um. Von dem Zwischenförderer werden die Gegenstände schließlich durch einen Kettenförderer übernommen, der mit einer noch höheren Geschwindigkeit transportiert.

Es ist augenscheinlich, daß die bekannte Zuführeinrichtung verhältnismäßig aufwendig und offenbar auch störanfällig ist, da die aufeinanderfolgenden Bewegungsabschnitte nicht zwingend sind. Insbesondere muß der Zwischenförderer beanstandet werden, weil dort die angeblich empfindlichen Gegenstände nur durch Reibungsschluß mitgenommen werden können. Liegen mehrere Gegenstände quer zur Förderrichtung nebeneinander, scheitert dieses Transportsystem. Ferner ist nicht erkennbar, daß bei der bekannten Vorrichtung die zu verpackenden Gegenstände einer besonders schonenden Behandlung unterliegen. Bei schwergewichtigen Gegenständen, wie Flaschen, Dosen etc., und hohen Arbeitsgeschwindigkeiten ist dies jedoch von großer Bedeutung. Die Gegenstände können bei großen Beschleunigungen bzw. Verzögerungen wegen der großen Massen und damit der relativ großen Trägheitskräfte leicht beschädigt werden. Dies gilt insbesondere für Flaschen, aber auch für andere Gegenstände, wenn diese beispielsweise in Gruppen zusammengefaßt und durch eine empfindliche Verpackung umschlossen sind.

Der vorliegenden Erfindung liegt daher die Aufgabe zugrunde, eine Vorrichtung der eingangs genannten Art zu schaffen, die sich zum einen durch eine einfache und damit wenig störanfällige Konstruktion auszeichnet, zum anderen sich auch für Gruppen von Gegenständen eignet, in denen mehrere Gegenstände quer zur Förderrichtung nebeneinander liegen und die auch bei hohen Fördergeschwindigkeiten eine schonende Behandlung zu der Gruppen zusammengefaßten Gegenstände erlaubt.

Diese Aufgabe wird erfindungsgemäß dadurch gelöst, daß die Gruppen durch den Zwischenförderer einem mit größerer Geschwindigkeit als dieser transportierenden Endförderer zuführbar sind, der je eine Gruppe durch einen von oben her auf diese absenkbaren Schieber mitnimmt und bis zum Stillstand (Endstellung) transportiert.

Bei der erfindungsgemäßen Lösung sind keine Stempel, Anschläge und mit den Förderern zusammenwirkende Klemmstempel zur Abteilung und zum Transport der abgeteilten Gegenstände mit erhöhter Geschwindigkeit erforderlich. Demnach handelt es sich bei der erfindungsgemäßen Lösung um eine gegenüber dem Stand der Technik relativ einfache Konstruktion, die sich durch eine entsprechend geringe Störanfälligkeit auszeichnet. Durch den von oben her auf die Gegenstände absenkbaren Schieber werden diese als Gruppe von dem Zwischenförderer nach Art eines »fliegenden Wechsels« übernommen, beschleunigt und wieder bis zum Stillstand gebracht. Der Schieber übt einerseits eine schiebende Funktion aus, gewährleistet andererseits aber auch den Zusammenhalt der Gruppe bei großen Transportgeschwindigkeitsänderungen. Es ist sichergestellt, daß nicht einzelne Gegenstände der Gruppe ihre Relativstellung bei Transportgeschwindigkeitsänderungen verändern, insbesondere etwa umkippen. Der Schieber gewährleistet demnach eine äußerst schonende Behandlung der Gegenstände einer Gruppe.

Bevorzugte konstruktive Weiterbildungen der erfindungsgemäßen Vorrichtung sind in den Unteransprüchen beschrieben.

Nachstehend wird ein Ausführungsbeispiel der Erfindung anhand der Zeichnungen näher erläutert. Es zeigt

Fig. 1 eine Vorrichtung für die Verpackung von Multipacks als Gegenstände in einen Karton, in stark vereinfachter Seitenansicht,

Fig. 2 einen Grundriß zu der Vorrichtung gemäß Fig. 1,

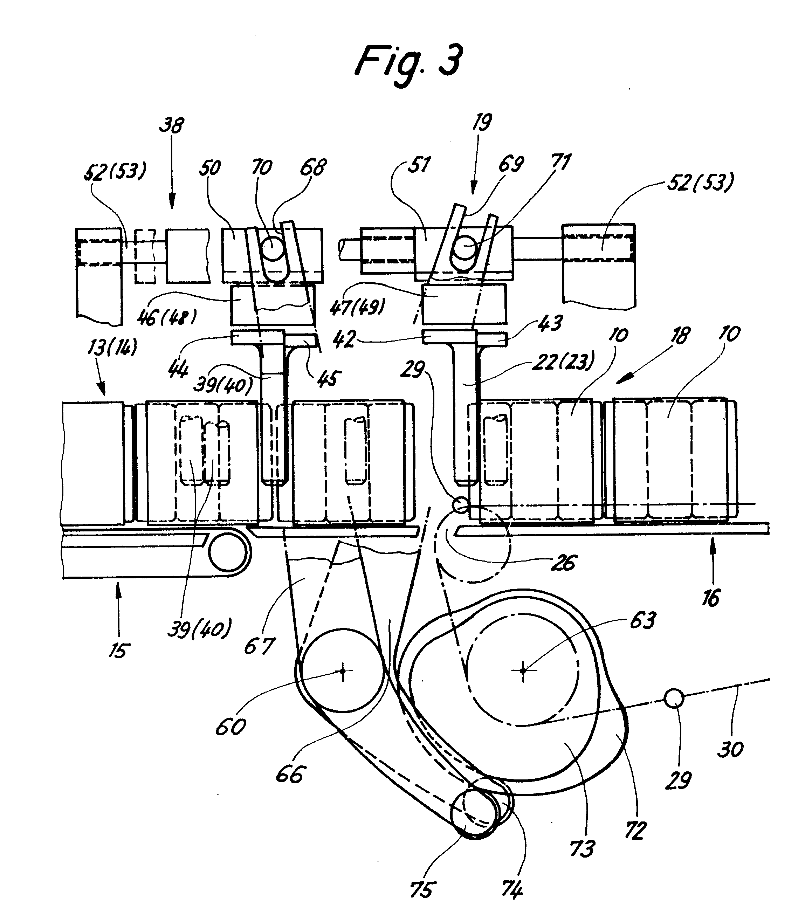

Fig. 3 eine Einzelheit der Vorrichtung gemäß Fig. 1 und 2 im Bereich der Bildung von Gruppen, in Seitenansicht bei vergrößertem Maßstab,

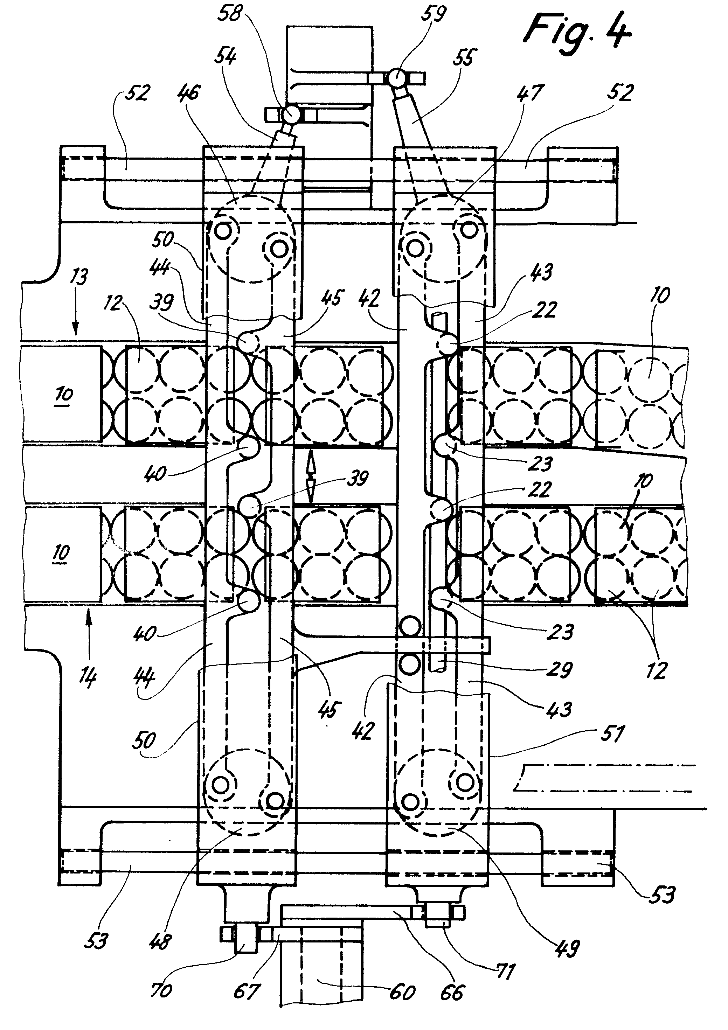

Fig. 4 einen Grundriß zu Fig. 3,

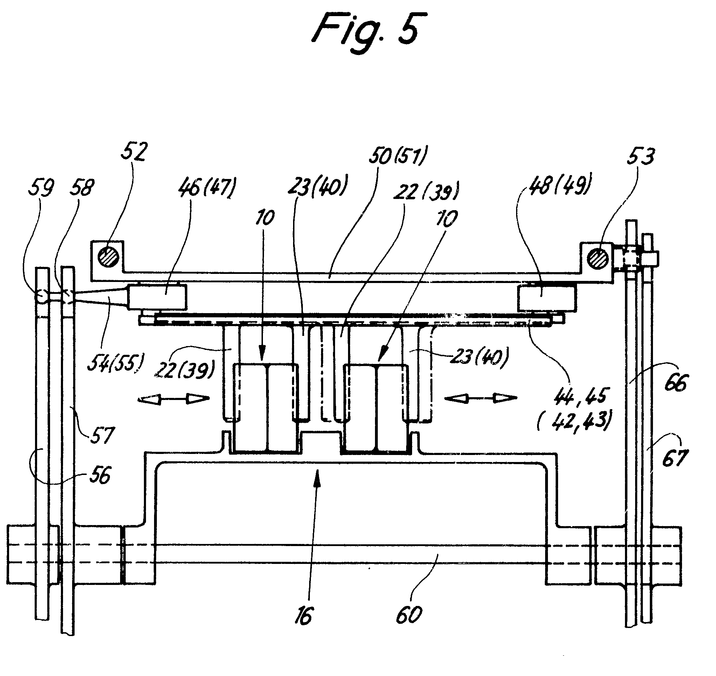

Fig. 5 eine Einzelheit der Vorrichtung gemäß Fig. 1 und 2 im Querschnitt V-V in Fig. 1, bei vergrößertem Maßstab,

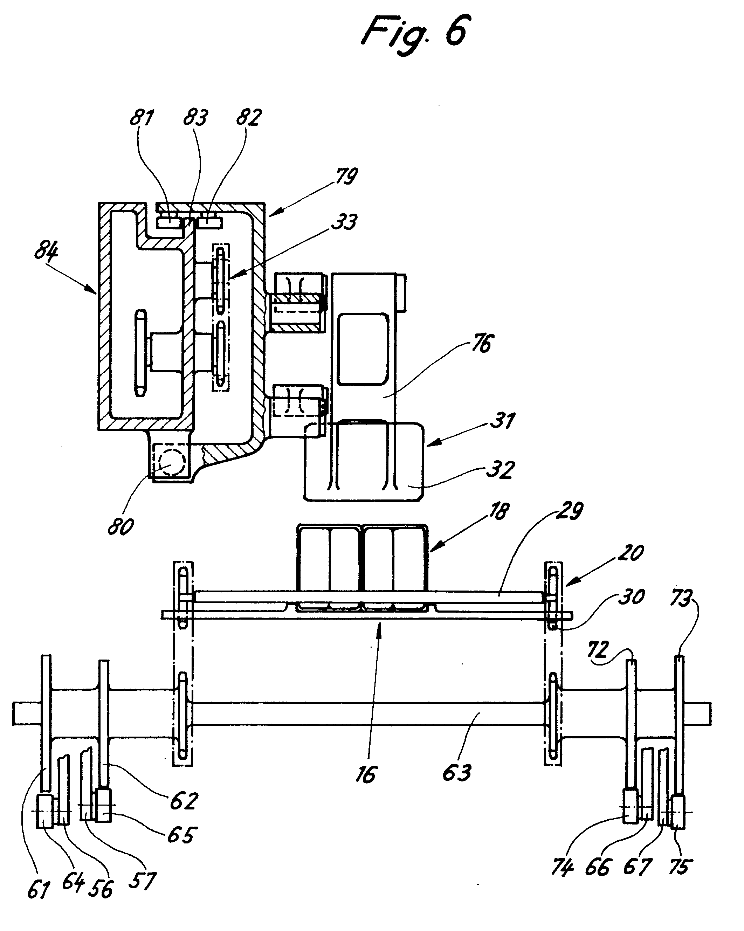

Fig. 6 einen Querschnitt VI-VI entsprechend Fig. 5 in Fig. 1,

Fig. 7 verschiedene Phasen des Verfahrens im Bereich der Bildung der Gruppen in schematisierter Grundrißdarstellung.

Bei dem vorliegenden Ausführungsbeispiel werden als Gegenstände 10 mehrere, nämlich jeweils vier Multipacks einem gemeinsamen Karton 11 zugeführt und durch diesen verpackt. Die Multipacks wiederum bestehen je aus mehreren, nämlich sechs Dosen 12.

Die Gegenstände 10 werden in Dichtfolge in zwei endlosen Strängen 13 und 14 auf einem als Förderband ausgebildeten Vorförderer 15 zugeführt. Es werden dann je zwei Gegenstände 10, nämlich Multipacks, von jedem Strang 13, 14 abgeteilt und durch Querverschiebung zusammengeführt. Vier dieser Gegenstände 10 finden sodann Aufnahme in einem Karton 11. Der Karton 11 liegt teilweise gefaltet im Bereich der Transportbahn der Gegenstände 10, nämlich auf einer Packungsbahn 16. Die vier Gegenstände 10 werden auf einem Teil des Zuschnitts für den Karton 11, z. B. auf einer auf der Packungsbahn 16 liegenden Bodenwand 17, abgestellt. Es erfolgt dann die weitere Faltung und Fertigstellung des Kartons 11 in geeigneter Weise.

Die Gegenstände 10 werden nach Absonderung von den Strängen 13, 14 als Gruppe 18 erfaßt und weitertransportiert, und zwar unter stufenweise Beschleunigung bis zum Abstellen auf dem Zuschnitt des Kartons 11. Dieser Transport der Gegenstände 10 bzw. der Gruppen 18 erfolgt durch einen (ersten) Anfangsförderer 19, der zugleich die Aufgabe der Absonderung der Gruppen 18 von den Strängen 13, 14 hat. Hieran schließt im vorliegenden Fall ein Zwischenförderer 20 ohne Geschwindigkeitssteigerung an. Es folgt dann ein Endförderer 21 mit einer gegenüber dem Zwischenförderer 20 bzw. Anfangsförderer 19 höheren Geschwindigkeit. Durch diesen Endförderer 21 werden die Gegenstände 10 auf dem Zuschnitt des Kartons 11 abgestellt.

Der Anfangsförderer 19 besteht aus einer Gruppe von Mitnehmerzapfen 22 und 23, die von den Seiten her in den Strang 13, 14 bzw. in den Bereich zwischen Gruppen 18 eintreten und diese dann im wesentlichen an der Rückseite erfassen. Die Mitnehmerzapfen 22, 23 werden dabei durch ein im einzelnen noch zu erläuterndes Getriebe sowohl in Förderrichtung wie auch quer zu dieser bewegt.

Die Packungsbahn 16 ist in mehrere Abschnitte unterteilt. An den Vorförderer 15 schließt eine Bühne 24 an, auf der jeweils eine Gruppe 18 (bzw. zwei nebeneinanderliegende) Aufnahme findet. Zwischen der Bühne 24 und einem anschließenden, dem Zwischenförderer 20 zugeordneten Bahnabschnitt 25 ist eine Lücke 26 gebildet. An den Bahnabschnitt 25 schließt ein weiterer Bahnabschnitt 27 der Packungsbahn 16, wiederum mit Lücke 28, an. Dieser ist dem Endförderer 21 zugeordnet.

Der Zwischenförderer 20 ist im vorliegenden Falle als Stangenförderer ausgebildet mit querlaufenden Stangen 29 zwischen endlosen Ketten 30. Die Stangen 29 treten dabei am Beginn und Ende des Bahnabschnitts 25 durch die Lücken 26, 28 hindurch. Jeweils eine von dem Anfangsförderer 19 zugeführte Gruppe 18 wird an der Rückseite durch eine Stange 29 erfaßt und dem Endförderer 21 zugeführt.

Der Endförderer 21 ist als im wesentlichen hin- und herbewegbarer Schieber 31 ausgebildet, der die Gruppe 18 durch einen Mitnehmersteg 32 an der Rückseite erfaßt. Der Schieber 31 senkt sich von oben her auf die Gruppe 18 ab, und zwar längs einer Bewegungsbahn, die durch einen Kettentrieb 33 für den Schieber 31 bestimmt ist. Ein in Transportrichtung rückwärtiger, abwärtsführender Trum 34 des Kettentriebs 33 bewirkt, daß der Schieber 31 von der rückwärtigen Seite her bei entsprechend höherer Geschwindigkeit an die Gruppe 18 herangeführt wird. Sobald diese erfaßt ist, erfolgt eine Geschwindigkeitssteigerung, die sich daraus ergibt, daß der Schieber 31 aus der durch den Trum 34 bestimmten, geneigten Abwärtsbewegung in eine Horizontalbewegung, die durch einen unteren Trum 35 bestimmt ist, umgelenkt wird. Am Ende der Bewegungsbahn in Transportrichtung wird der Schieber 31 durch entsprechende Umlenkung des Kettentriebs 33 von der Gruppe 18 abgehoben. Wenn der Schieber 31 mit der Gruppe 18 die Endstellung erreicht, erfolgt eine allmähliche Verzögerung der Bewegung durch die Umlenkung des Kettentriebs 33 und eine dadurch bedingte nach oben abgelenkte Bewegung des Schiebers 31.

Damit während des Transports der Gruppe 18 durch den Schieber 31 bei verhältnismäßig hoher Geschwindigkeit keine unerwünschten Relativverschiebungen der Gegenstände 10 innerhalb der Gruppe 18 erfolgen, ist der Schieber 31 wie eine die Gruppe 18 von oben umfassende Haube ausgebildet. Auf der in Transportrichtung vorderen Seite ist zu diesem Zweck ein Gegenhalter 41 als Teil des Schiebers 31 vorgesehen. Die Gruppe 18 wird demnach zwischen dem Mitnehmersteg 32 und dem Gegenhalter 41 während des Transportes fixiert.

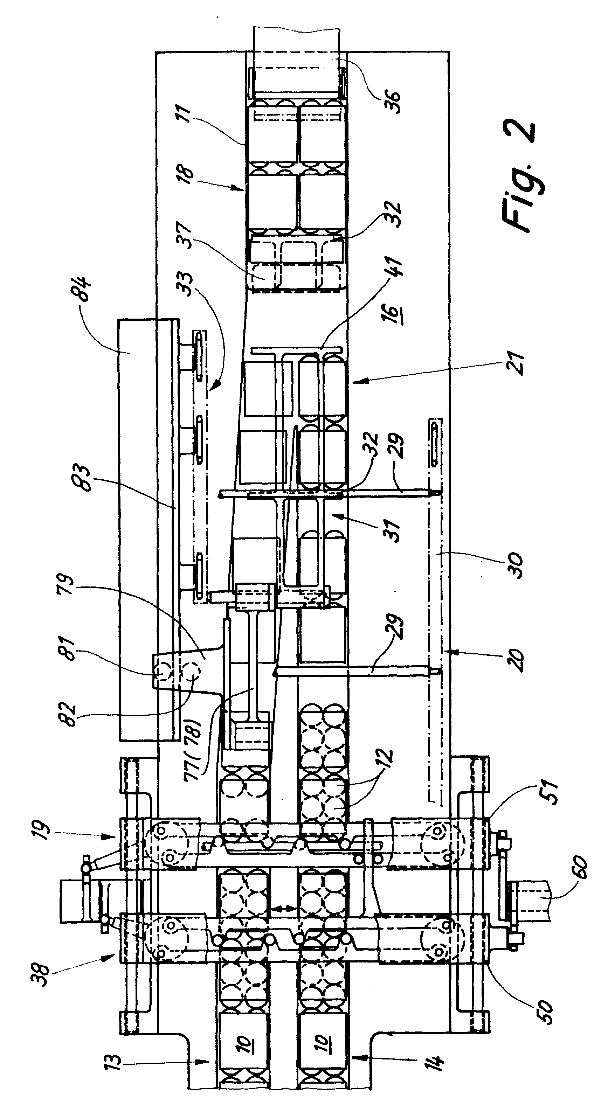

Die exakte Endstellung der Gruppe 18 auf dem Zuschnitt des Kartons 11 wird durch einen Endanschlag 36 bestimmt. Dieser ist in Förderrichtung bewegbar und derart gesteuert, daß er der zugeführten Gruppe 18 entgegenläuft und dann mit dieser in die Endstellung (mittlere Stellung in Fig. 1) zurückläuft. Dadurch wird ein hartes, stoßartiges Auftreffen der Gruppe 18 auf den Endanschlag 36 vermieden. Für die Querabförderung der Gruppe 18 mit dem Karton 11 ist der Endanschlag 36 noch weiter zurückziehbar.

Die Gegenstände 10 werden im vorliegenden Fall auf die Bodenwand 17 eines Zuschnitts aufgeschoben. Damit durch die Aufschubbewegung der Zuschnitt nicht in seiner Lage verändert wird, ist in der Packungsbahn 16 eine schwenkbare Auflauframpe 37 vorgesehen, die durch die zugeförderte Gruppe 18 bis zur schrägen Auflage auf der Randkante des Zuschnitts gekippt wird. Nach Beendigung der Aufschubbewegung kehrt die Auflauframpe 37 durch eine Zugfeder in eine zurückgeschwenkte Ausgangsstellung zurück. In dieser kann der mit seitlich überstehenden Lappen versehene Zuschnitt des Kartons 11 mit der Gruppe 18 quer zur Verpackungsbahn 16 abgefördert werden.

Der Anfangsförderer 19 ist bei dem vorliegenden Ausführungsbeispiel mit einer Stopeinrichtung 38 für die nachfolgenden Stränge 13, 14 versehen. Stopeinrichtung 38 und Anfangsförderer 19 sind in ähnlicher Weise aufgebaut und hinsichtlich ihrer Bewegungen aufeinander abgestimmt.

Wie der Anfangsförderer 19 ist die Stopeinrichtung 38 mit zwei Gruppen von Haltezapfen 39, 40 versehen. Die Mitnehmerzapfen 22, 23 des Anfangsförderers 19 und die Haltezapfen 39, 40 der Stopeinrichtung 38 sind hinsichtlich ihrer Bewegungen derart aufeinander abgestimmt, daß sie stets gemeinsam und in entsprechenden gleichen Richtungen quer zur Transportrichtung der Gegenstände 10 bewegt werden. Die Bewegung in Transportrichtung ist derart, daß bei fixierten Strängen 13, 14 durch die Haltezapfen 39, 40 die Mitnehmerzapfen 22, 23 eine Relativbewegung in Förderrichtung ausführen, wodurch die betreffenden Gegenstände, nämlich jeweils zwei Multipacks eines Stranges 13, 14, auf die Geschwindigkeit des Zwischenförderers 20 beschleunigt werden. Zum Anhalten der Stränge 13, 14 sowie für die Beschleunigung von Gegenständen 10 treten die Zapfen 22, 23; 39, 40 von den Seiten her in die Stränge 13, 14 ein, und zwar im Bereich von »Einkerbungen«, die durch die Grundrißgestalt der Gegenstände 10 (runde Dosen, Flaschen oder dergl.) bzw. der Multipacks innerhalb der Stränge 13, 14 gebildet sind.

Die aufeinander abgestimmte Bewegung der Mitnehmer- bzw. Haltezapfen 22, 23; 39, 40 ist am besten aus 7 ersichtlich. Dort sind einzelne Multipacks eines Stranges 13 bzw. 14 gezeigt.

In der oben dargestellten Position ist der nachfolgende Strang 13, 14 durch die Haltezapfen 39, 40, die den äußeren Randbereich der Dosen 12 erfassen, gestoppt. Ein Gegenstand 10, nämlich ein Multipack, befindet sich antriebslos auf der Bühne 24. In Transportrichtung davorliegende zwei Gegenstände 10, nämlich Multipacks, sind durch die Mitnehmerzapfen 22, 23 erfaßt und durch Beschleunigen dem ständig umlaufenden Zwischenförderer 20 zugeführt.

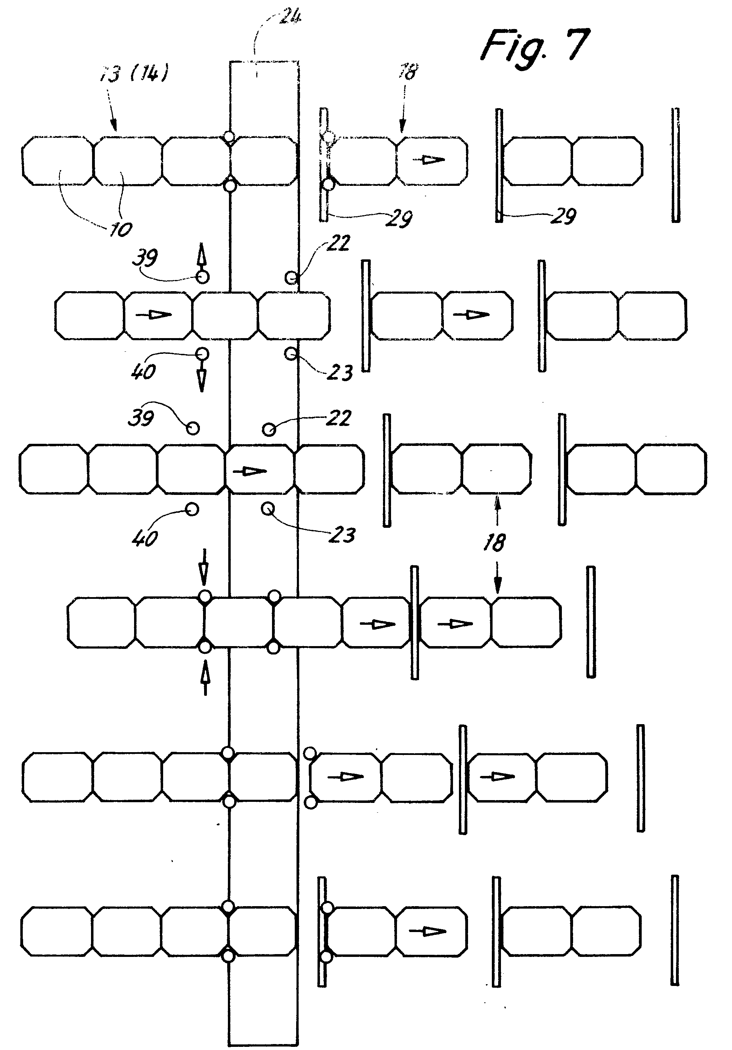

Die Mitnehmer- und Haltezapfen 22, 23; 39, 40 werden nunmehr gleichzeitig auseinander- und damit außer Eingriff mit den Gegenständen 10 bewegt. Während sowohl die abgeteilten Gruppen 18 durch den Zwischenförderer 20 als auch der Strang 13, 14 durch den Vorförderer 15 weitertransportiert werden, ist die Bewegung der auseinandergezogenen Zapfen gegenläufig bis zu einer Ausgangsstellung im dritten Bild der Fig. 7. Der Abstand der Mitnehmerzapfen 22, 23 von den Haltezapfen 39, 40 entspricht dabei im wesentlichen der Längsabmessung einer Teilgruppe, nämlich eines Gegenstands 10. Die Mitnehmer- und Haltezapfen 22, 23; 39, 40 laufen eine kurze Strecke gleichgerichtet mit den Gegenständen 10 und treten dabei durch entsprechende Bewegung quer zu der Förderrichtung in den Strang 13, 14 ein, der zuvor bis zur Anlage an den Zwischenförderer 20 bzw. einer Stange 29 desselben transportiert worden ist. In dieser Eingriffsstellung laufen beide Gruppen von Zapfen mit den Gegenständen 10 mit, bis der »neutrale« Gegenstand 10 zwischen den Mitnehmerzapfen 22, 23 einerseits und Haltezapfen 39, 40 andererseits auf der Bühne 24 steht. Die Haltezapfen 39, 40 werden nunmehr angehalten, während die Mitnehmerzapfen 22, 23 die in Transportrichtung davorliegenden Gegenstände 10 aus dem momentanen Stillstand bis auf die Geschwindigkeit des Zwischenförderers 20 beschleunigen. Damit wird wieder die in Fig. 7 oben gezeigte Anfangsposition erreicht. Die Geschwindigkeit des Vorförderers 15 ist im vorliegenden Falle größer als die Geschwindigkeit des Zwischenförderers 20, so daß der Strang 13, 14 nach dem Ausklinken der Zapfen den Zwischenförderer 20 einholt.

Zur Durchführung dieser Bewegungen sind die Mitnehmerzapfen 22, 23 sowie die Haltezapfen 39, 40 je paarweise an einer oberhalb der Stränge 13, 14 quer verlaufenden Traverse 42, 43 bzw. 44, 45 angebracht. Die Traversen 42 ... 45 nehmen jeweils einen der Zapfen eines Stranges 13 bzw. 14 auf.

Die Bewegung der Zapfen quer zur Förderrichtung der Gegenstände 10 wird durch entsprechende Querbewegung der Traversen 42 ... 45 bewirkt. Diese sind mit beiden Enden jeweils schwenkbar auf bzw. an Drehstücken 46, 47 sowie 48, 49 gelagert. Die Drehstücke 46 ... 49 ihrerseits sind auf bzw. an der Unterseite eines Querträgers 50 bzw. 51 drehbar gelagert. Die Querträger 50, 51 wiederum lagern mit ihren Enden auf ortsfesten Gleitstangen 52, 53 zu beiden Seiten der Packungsbahn 16. Die Querträger 50, 51 sind auf diesen Gleitstangen 52, 53 in Längsrichtung derselben hin- und herverschiebbar.

Der Antrieb der Traversen 42 ... 45 und damit die Querbewegung der Mitnehmer- sowie Haltezapfen 22, 23; 39, 40 erfolgt durch Drehbewegung der jeweils angetriebenen Drehstücke 46, 47. Diese sind über Antriebsarme 54, 55 mit Antriebshebeln 56, 57 verbunden, die in schwenkendem Sinne angetrieben werden und entsprechende Schwenkbewegungen auf die Antriebsarme 54, 55 übertragen. Deren Schwenkbewegungen wiederum verursachen Drehbewegungen der Drehstücke 46, 47 längs eines Winkelbereichs. Dies wiederum hat gegenläufige Bewegungen der Traversen 42 ... 45 zur Folge, da diese mit ihren Enden auf gegenüberliegenden Seiten des Drehmittelpunktes der Drehstücke 46, 47, 48, 49 gelagert sind. Die starr mit den Drehstücken 46, 47 verbundenen Antriebsarme 54, 55 sind über Kugelgelenke 58,

Fig. 2

# Fig. 3

Fig. 4

0 001 967

13

# Fig. 5

# Fig. 6

Fig. 7

0 001 967

19